# EUROPEAN PATENT APPLICATION

(11) **EP 4 566 814 A1**
(43) Date of publication of application: **11.06.2025**
(21) Application number: 24218457.0
(22) Date of filing: 09.12.2024
(51) Int. Cl.: B32B 27/08, B32B 15/00, B32B 27/32, B32B 27/34, B32B 27/36, H01M 10/42, H01M 50/105, H01M 50/122, H01M 50/126, H01M 50/133

(54) **EXTERIOR CASE FOR LITHIUM SECONDARY BATTERY, INSPECTION METHOD OF EXTERIOR CASE FOR LITHIUM SECONDARY BATTERY, AND LITHIUM SECONDARY BATTERY**

(30) Priority: 08.12.2023 KR 20230177502
(71) Applicant: SK On Co., Ltd., Seoul 03161 (KR); SK Innovation Co., Ltd., Seoul 03188 (KR)
(72) Inventor: PARK, Gyu Rim, 34124 Daejeon (KR); KIM, Sung Yeop, 34124 Daejeon (KR); LEE, Soon Bo, 34124 Daejeon (KR); JANG, Dong Il, 34124 Daejeon (KR)
(74) Representative: Prüfer & Partner mbB Patentanwälte · Rechtsanwälte

(57) **Abstract**

An exterior case for a lithium secondary battery according to an embodiment of the present disclosure includes: an outer layer including one or more of a polyester-based resin and a polyamide-based resin; an inner layer including a polyolefin-based resin, and including a first inner layer, a second inner layer, and a third inner layer; and a barrier layer disposed between the outer layer and the inner layer. The first inner layer is disposed between the barrier layer and the second inner layer. The second inner layer is disposed between the first inner layer and the third inner layer and has a different crystal structure from the first inner layer and the third inner layer. An onset temperature of the third inner layer is 100°C or higher.

## Description

### BACKGROUND OF THE INVENTION

### 1. Field

Embodiments of the present disclosure relate to an exterior case for a lithium secondary battery, an inspection method of an exterior case for a lithium secondary battery, and a lithium secondary battery.

### 2. Description of the Related Art

As the electronics, communications, and space industries develop, the demand for lithium secondary batteries as an energy source is increasing. In particular, as the importance of global eco-friendly policies is emphasized, the electric vehicle market is growing rapidly, and research and development on the lithium secondary batteries is being actively conducted domestically and internationally.

The lithium secondary batteries may be classified into cylindrical batteries, square batteries, and pouch-type batteries, etc., depending on their shapes. A pouch-type battery may be preferable to batteries of other shapes in that it may sufficiently secure the energy density of the battery.

The pouch-type battery includes a pouch-type exterior case that accommodates cells. The pouch-type exterior case forms a sealing part to separate the inside and the outside of the battery. For example, the sealing part may be formed by bonding sheets of the pouch-type exterior case and then thermally compressing them.

The sealing part formed by the pouch-type exterior case needs to have suitable sealability for the inside of the battery. In order to test the sealability, various methods have been used after forming the sealing part for the pouch-type exterior case. For example, after forming the sealing part, the tensile strength at the thermal fusion portion is checked, or the time required for the sealing part to be destroyed in a high temperature environment is checked to test the sealability. In this case, it may take an excessive amount of time to determine the sealability, and since the sealability may only be determined after the sealing part is manufactured, the process may become excessively complicated.

### SUMMARY OF THE INVENTION

One aspect of the present disclosure is to provide an exterior case for a lithium secondary battery, in which sealing predictability is improved so that convenience of sealing inspection may be improved, an inspection method of an exterior case for a lithium secondary battery, and a lithium secondary battery.

One aspect of the present disclosure is to provide an exterior case for a lithium secondary battery having improved sealability of a manufactured product and improved reliability for the sealability, an inspection method of an exterior case for a lithium secondary battery, and a lithium secondary battery.

An exterior case for a lithium secondary battery according to an embodiment of the present disclosure may include: an outer layer including one or more of a polyester-based resin and a polyamide-based resin; an inner layer including a polyolefin-based resin, and including a first inner layer, a second inner layer, and a third inner layer; and a barrier layer disposed between the outer layer and the inner layer. The first inner layer may be disposed between the barrier layer and the second inner layer. The second inner layer may be disposed between the first inner layer and the third inner layer and may have a different crystal structure from the first inner layer and the third inner layer. An onset temperature of the third inner layer may be 100°C or higher.

According to an embodiment, the polyester-based resin may include one or more selected from a group consisting of polyethylene terephthalate (PET), polybutylene terephthalate (PBT), polyethylene naphthalate (PEN), polybutylene naphthalate (PBN), copolyester, and polycarbonate (PC). The polyamide-based resin may include one or more selected from a group consisting of nylon 6, nylon 6.6, nylon 6.10, and polymethaxylylene amipamide (MXD 6).

According to an embodiment, the barrier layer may include a metal or an inorganic compound. The metal may include one or more of aluminum and metals. The inorganic compound may include silicon oxide, alumina, or the like.

According to an embodiment, the first inner layer, the second inner layer, and the third inner layer may have a thickness ratio of 1:2:1 to 1:3:1.

According to an embodiment, the first inner layer may include random polypropylene and maleic acid. The second inner layer may include impact polypropylene. The third inner layer may include random polypropylene.

A lithium secondary battery according to an embodiment of the present disclosure may include: the exterior case for a lithium secondary battery; and an electrode cell disposed within the exterior case, and including a cathode, an anode, and a separator disposed between the cathode and the anode.

An inspection method of an exterior case for a lithium secondary battery according to an embodiment of the present disclosure may include: measuring an onset temperature of an exterior case for a lithium secondary battery using an atomic force microscope (AFM); and determining sealability of the exterior case based on the onset temperature.

According to an embodiment, the exterior case may include an outer layer including one or more of a polyester-based resin and a polyamide-based resin; an inner layer including a polyolefin-based resin, and including a first inner layer, a second inner layer, and a third inner layer; and a barrier layer disposed between the outer layer and the inner layer. The measuring may include measuring an onset temperature of the third inner layer.

According to an embodiment, the measuring may include contacting a measuring tip of the AFM to a point within 20 µm based on an outer surface of the third inner layer.

According to an embodiment, the measuring may include applying heat to the third inner layer by the measuring tip.

According to an embodiment, the determining may include comparing the onset temperature of the third inner layer with a reference temperature of 100°C.

According to an embodiment, the determining may include, when the onset temperature of the third inner layer is 100°C or higher, determining that sealability of a lithium secondary battery manufactured using the exterior case is suitably achievable; and when the onset temperature of the third inner layer is less than 100°C, determining that it is difficult to suitably achieve the sealability of the lithium secondary battery manufactured using the exterior case.

According to embodiments of the present disclosure, it is possible to provide an exterior case for a lithium secondary battery, in which sealing predictability is improved so that convenience of sealing inspection may be improved, an inspection method of an exterior case for a lithium secondary battery, and a lithium secondary battery.

According to embodiments of the present disclosure, it is possible to provide an exterior case for a lithium secondary battery having improved sealability of a manufactured product and improved reliability for the sealability, an inspection method of an exterior case for a lithium secondary battery, and a lithium secondary battery.

### BRIEF DESCRIPTION OF THE DRAWINGS

FIG. 1 is a schematic diagram illustrating a lithium secondary battery according to an embodiment.
FIG. 2 is a schematic cross-sectional view illustrating an exterior case according to an embodiment.
FIG. 3 is a schematic cross-sectional view illustrating an exterior case according to another embodiment.
FIG. 4 is a flowchart illustrating an inspection method of an exterior case for a lithium secondary battery according to an embodiment.

### DETAILED DESCRIPTION

Specific structural and functional descriptions of embodiments according to the concept of the present disclosure disclosed in the present specification or application are merely exemplified for the purpose of explaining embodiments according to the concept of the present disclosure, and embodiments according to the concept of the present disclosure may be implemented in various forms and should not be construed as being limited to the embodiments described in the present specification or application.

### 1. Exterior case for lithium secondary battery and lithium secondary battery including the same

A lithium secondary battery 1 according to an embodiment is manufactured so that an exterior case (POU) for a lithium secondary battery forming a sealing part (SEL) satisfies predetermined thermal characteristics. The present inventor has found that it is possible to determine the sealability of the lithium secondary battery 1 based on the thermal characteristics of the exterior case (POU) of the lithium secondary battery measured by an atomic force microscope (AFM). In this case, the reliability for the sealability of the lithium secondary battery 1 is improved, while the process for testing the sealability is simplified, so that the cost may be reduced.

Hereinafter, with reference to the attached drawings, an exterior case for a lithium secondary battery, an inspection method of an exterior case for a lithium secondary battery, and a lithium secondary battery according to embodiments will be described.

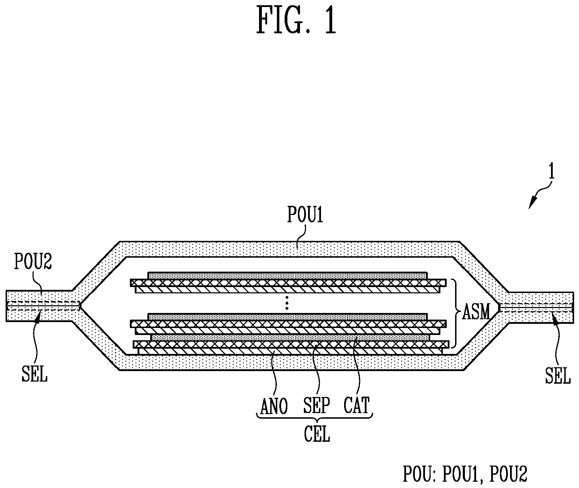

FIG. 1 is a schematic diagram illustrating a lithium secondary battery according to an embodiment.

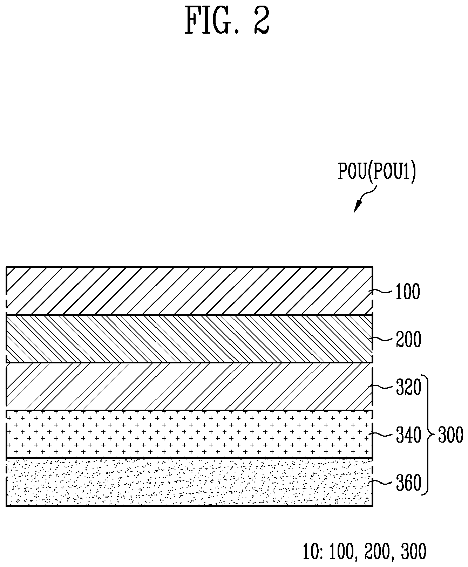

FIG. 2 is a schematic cross-sectional view illustrating an exterior case according to an embodiment.

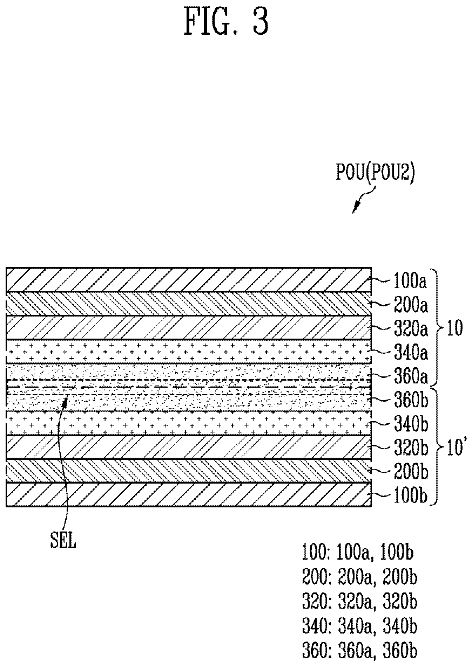

FIG. 3 is a schematic cross-sectional view illustrating an exterior case according to another embodiment.

Referring to FIGS. 1 to 3, the lithium secondary battery 1 according to an embodiment may include an outer layer 100 including one or more of a polyester-based resin and a polyamide-based resin; an inner layer 300 including a polyolefin-based resin, and including a first inner layer 320, a second inner layer 340, and a third inner layer 360; and a barrier layer 200 disposed between the outer layer 100 and the inner layer 300, wherein the first inner layer 320 may be disposed between the barrier layer 200 and the second inner layer 340, the second inner layer 340 may be disposed between the first inner layer 320 and the third inner layer 360, and have a different crystal structure from the first inner layer 320 and the third inner layer 360, and an onset temperature of the third inner layer 360 may be 100°C or higher.

The lithium secondary battery 1 according to an embodiment includes an exterior case (POU) for a lithium secondary battery for accommodating an electrode assembly (ASM). FIG. 1 is a schematic diagram illustrating a lithium secondary battery according to an embodiment. FIG. 2 and FIG. 3 are schematic cross-sectional views illustrating an exterior case according to an embodiment. FIG. 2 may show a first exterior case (POU1). FIG. 3 may show a second exterior case (POU2).

Hereinafter, for convenience of explanation, an exterior case (POU) for a lithium secondary battery is referred to as an exterior case (POU).

The exterior case (POU) may include a laminated structure 10 including the outer layer 100, the barrier layer 200, and the inner layer 300. According to an embodiment, the exterior case (POU) may include a first exterior case (POU1) formed by a single laminated structure 10 and a second exterior case (POU2) in which two laminated structures 10 and 10' are bonded together.

The outer layer 100 may be disposed outward relative to the inner layer 300 and the barrier layer 200. According to an embodiment, the outer layer 100 may be bonded with the barrier layer 200 by various lamination methods (for example, dry lamination or the like). According to an embodiment, a polyurethane adhesive or the like may be used to bond the outer layer 100 and the barrier layer 200, but the present disclosure is not limited thereto. According to an embodiment, the outer layer 100 may be referred to as a protective layer.

The outer layer 100 may include various materials in consideration of the chemical resistance and moldability and the like of the exterior case (POU). For example, the outer layer 100 may include one or more of a polyester-based resin and a polyamide-based resin. According to an embodiment, the polyester-based resin may include one or more selected from the group consisting of polyethylene terephthalate (PET), polybutylene terephthalate (PBT), polyethylene naphthalate (PEN), polybutylene naphthalate (PBN), copolyester, and polycarbonate (PC), and according to an embodiment, the polyamide resin may include one or more selected from a group consisting of nylon 6, nylon 6.6, nylon 6.10, and polymethaxylylene amipamide (MXD 6).

The outer layer 100 may form an outer edge layer in the first exterior case (POU1). The outer layer 100 may be an upper outer layer 100a or a lower outer layer 100b in the second exterior case (POU2).

The barrier layer 200 may be disposed between the outer layer 100 and the inner layer 300. The barrier layer 200 may prevent impurities (moisture, gas, etc.) from penetrating into the lithium secondary battery 1 from the outside. The barrier layer 200 may include a metal or an inorganic compound, and the metal may include one or more of aluminum and metals, and the inorganic compound may include silicon oxide, alumina, or the like. According to an embodiment, considering that it may be interposed between two or more layers and may suppress the occurrence of pinholes due to bending, it may be preferable that the barrier layer 200 includes aluminum.

The barrier layer 200 may form an intermediate layer in the first exterior case (POU1), and the barrier layer 200 may be an upper barrier layer 200a and a lower barrier layer 200b in the second exterior case (POU2).

The inner layer 300 may be disposed on the inner side of the outer layer 100 and the barrier layer 200. The inner layer 300 may include various functional layers. For example, the inner layer 300 may include a first inner layer 320, a second inner layer 340, and a third inner layer 360. According to an embodiment, the layers forming the inner layer 300 may be manufactured using a nano-extrusion, co-extrusion, tandem extrusion, or lamination method.

According to an embodiment, the first inner layer 320, the second inner layer 340, and the third inner layer 360 may have a thickness ratio of 1:2:1 to 1:3:1. For example, when the inner layer 300 has a thickness of 80 µm, the first inner layer 320 may be 20 µm, the second inner layer 340 may be 40 µm, and the third inner layer 360 may be 20 µm. However, the present disclosure is not necessarily limited thereto.

Each layer forming the inner layer 300 may include a polyolefin-based resin. For example, the polyolefin-based resin may include one or more of a polyethylene-based resin and a polypropylene-based resin.

According to an embodiment, the first inner layer 320 may include random polypropylene and maleic acid, the second inner layer 340 may include impact polypropylene, and the third inner layer 360 may include random polypropylene.

The first inner layer 320 may be disposed between the barrier layer 200 and the second inner layer 340. The first inner layer 320 may include a polyolefin-based resin, but may further include a material suitable for bonding with the barrier layer 200. For example, when the barrier layer 200 includes a metal (aluminum or the like), the first inner layer 320 may include a polypropylene-based resin, but may further include maleic acid to have suitable bonding properties with the metal. Maleic acid includes two carboxyl groups and one hydroxyl group, and the ratio of the carboxyl groups and the hydroxyl groups may form a structure suitable for bonding with the metal ion. According to an embodiment, the first inner layer 320 may include random polypropylene. The polypropylene-based resin for forming the first inner layer 320 may be a random copolymer. The random copolymer may include a structure in which a comonomer is contained to improve uniformity.

The first inner layer 320 may be adjacent to the barrier layer 200 in the first exterior case (POU1), and the first inner layer 320 may be an upper first inner layer 320a and a lower first inner layer 320b in the second exterior case (POU2).

The second inner layer 340 may be disposed between the first inner layer 320 and the third inner layer 360. The second inner layer 340 may include a polyolefin-based resin, and the polyolefin-based resin forming the second inner layer 340 may have a structure in which impact resistance may be improved. The second inner layer 340 may have a different crystal structure from the first inner layer 320 and the third inner layer 360. For example, the second inner layer 340 may include an impact copolymer. The second inner layer 340 may include impact polypropylene. For example, the impact polypropylene is a nano-composite polypropylene that may include homo polypropylene and an additional rubber phase component (e.g., ethylenepropylene rubber, or the like). The impact copolymer may be a block copolymer and may be robust against external force to improve the impact resistance of the exterior case (POU). According to an embodiment, the second inner layer 340 may be referred to as a core layer.

The second inner layer 340 may form a core layer of the inner layer 300 in the first exterior case (POU1), and the second inner layer 340 may be an upper second inner layer 340a and a lower second inner layer 340b in the second exterior case (POU2).

The third inner layer 360 may be disposed on the other surface of the second inner layer 340 on which the first inner layer 320 is not disposed. The third inner layer 360 may include a polyolefin-based resin. For example, the third inner layer 360 may include a polypropylene-based resin having a random copolymer structure. Since the third inner layer 360 includes a random copolymer, an excessive temperature may not be required during thermal fusion to form a sealing part (SEL).

The third inner layer 360 may form the sealing part (SEL) of the exterior case (POU). For example, in a region for sealing the exterior case (POU), by thermally compressing the upper laminated structure 10 and the lower laminated structure 10', the third inner layer 360a of the upper laminated structure 10 and the third inner layer 360b of the lower laminated structure 10' may be bonded to each other, and the sealing part (SEL) of the exterior case (POU) may be manufactured.

The third inner layer 360 may form the innermost layer of the inner layer 300 in the first exterior case (POU1), and the third inner layer 360 may be an upper third inner layer 360a and a lower third inner layer 360b in the second exterior case (POU2).

The second exterior case (POU2) may include the upper laminated structure 10 and the lower laminated structure 10'. The upper laminated structure 10 may include the upper outer layer 100a, the upper barrier layer 200a, the upper first inner layer 320a, the upper second inner layer 340a, and the upper third inner layer 360a. The lower laminated structure 10' may include the lower outer layer 1 00b, the lower barrier layer 200b, the lower first inner layer 320b, the lower second inner layer 340b, and the lower third inner layer 360b.

In order to seal the exterior case (POU), heat and pressure may be applied while the upper third inner layer 360a and the lower third inner layer 360b are in contact, and in this case, the resin (for example, a polypropylene-based resin) of each of the upper third inner layer 360a and the lower third inner layer 360b may be melted and bonded to each other. The upper third inner layer 360a and the lower third inner layer 360b may include the same resin layer, so that a uniform sealing part (SEL) may be formed by melting.

The third inner layer 360 may include random polypropylene, as a random copolymer. Here, the onset temperature of the random polypropylene forming the third inner layer 360 may be 100°C or higher.

The onset temperature may be a temperature at which a target material begins to become flexible (or melt) when the temperature is increased. According to an embodiment, the onset temperature of the material forming the third inner layer 360 may be measured by an atomic force microscope (AFM).

For example, after a tip capable of emitting heat is installed in the AFM, the tip may be brought into contact with the target material, and the temperature of the tip may be constantly changed (for example, increased at a uniform rate). In this case, a part of the target material adjacent to the tip may be melted, and the microscopic behavior due to the melting of the target material may be measured by AFM, and the temperature at which the microscopic behavior is observed may be determined as the onset temperature.

The present inventor has confirmed that when the onset temperature of the third inner layer 360, at least a part of which forms the sealing part (SEL) during thermal fusion is 100°C or higher, the sealing of the lithium secondary battery 1 manufactured accordingly is suitably performed.

In other words, the present inventor has found that the sealing suitability can be determined by checking the thermal properties of a part of the structure forming the sealing part (SEL) in the exterior case (POU). Accordingly, the exterior case (POU) may be specifically manufactured with a structure in which the onset temperature of the third inner layer 360 is 100°C or higher, and accordingly, the sealability is improved, and the lithium secondary battery 1 including the exterior case (POU) with improved reliability for the sealability may be provided.

In addition, according to prior technology, it was necessary to assess the sealing suitability or the like only after confirming the actual sealing structure by thermally fusing the exterior case (POU). However, according to an embodiment, the sealing suitability after actual manufacturing may be determined by checking the thermal properties of a part of the structure involved in sealing/fusion before thermally fusing the exterior material (POU). In this case, the process may be simplified, so the process cost may be reduced, and since the sealing suitability is determined based on consistent properties, the reliability of the sealing suitability is significantly improved.

According to an embodiment, a lithium secondary battery 1 including the above-described exterior case (POU) is provided. The lithium secondary battery 1 may include a cathode (CAT), an anode (ANO), and a separator (SEP).

According to an embodiment, the lithium secondary battery 1 may include the above-described exterior case (POU) for a lithium secondary battery; and an electrode cell (CEL) disposed within the exterior case (POU) for a lithium secondary battery, and including a cathode (CAT), an anode (ANO), and a separator (SEP) disposed between the cathode (CAT) and the anode (ANO).

The cathode (CAT) and the anode (ANO) may include a current collector and an active material layer disposed on the current collector. For example, the cathode (CAT) may include a cathode current collector and a cathode active material layer, and the anode (ANO) may include an anode current collector and an anode active material layer.

The current collector may include a known conductive material within a range that does not cause a chemical reaction in the lithium secondary battery. For example, the current collector may include any one of stainless steel, nickel (Ni), aluminum (Al), titanium (Ti), copper (Cu), and an alloy thereof, and may be provided in various forms such as a film, a sheet, a foil, etc.

The active material layer includes an active material. For example, the cathode active material layer may include a cathode active material, and the anode active material layer may include an anode active material.

The cathode active material may be a material into which lithium ions may be intercalated and deintercalated. The cathode active material may be a lithium metal oxide. For example, the cathode active material may be one of a lithium manganese-based oxide, a lithium nickel-based oxide, a lithium cobalt-based oxide, a lithium nickel manganese-based oxide, a lithium nickel cobalt manganese-based oxide, a lithium nickel cobalt aluminum-based oxide, a lithium iron phosphate-based compound, a lithium manganese phosphate-based compound, a lithium cobalt phosphate-based compound, and a lithium vanadium phosphate-based compound.

The anode active material may be a material into which lithium ions may be absorbed and deintercalated. For example, the anode active material may be any one of a carbon-based material such as crystalline carbon, amorphous carbon, a carbon composite, a carbon fiber, a lithium alloy, silicon (Si), and tin (Sn). According to an embodiment, the anode active material may be natural graphite or artificial graphite, but is not limited thereto.

The cathode (CAT) and the anode (ANO) may further include a binder and a conductive material, respectively.

The binder may mediate bonding between the current collector and the active material layer, thereby improving mechanical stability. For example, the binder may be an organic binder or an aqueous binder. For example, the organic binder may be any one of vinylidene fluoride-hexafluoropropylene copolymer (PVDF-co-HFP), polyvinylidene fluoride (PVDF), polyacrylonitrile, and polymethylmethacrylate, and the aqueous binder may be styrenebutadiene rubber (SBR), but are not limited thereto.

The conductive material may improve electrical conductivity of the secondary battery. The conductive material may include a metal-based material. The conductive material may include a typical carbon-based conductive material. For example, the conductive material may include any one of graphite, carbon black, graphene, and carbon nanotubes, and preferably may include carbon nanotubes.

The separator (SEP) is interposed between the cathode (CAT) and the anode (ANO). The separator (SEP) may be configured to prevent electrical short-circuiting between the cathode (CAT) and the anode (ANO) and to allow ion flow.

For example, the separator (SEP) may include a polyolefin-based material. The separator (SEP) may include a porous polymer film or a porous non-woven fabric. The porous polymer film may be composed of a single layer or multiple layers including a polyolefin-based polymer such as an ethylene polymer, a propylene polymer, an ethylene/butene copolymer, an ethylene/hexene copolymer, and an ethylene/methacrylate copolymer. The porous non-woven fabric may include high-melting-point glass fibers, polyethylene terephthalate fibers. However, this is not limited thereto and, according to an embodiment, it may be a high-heat-resistant separator including ceramic (ceramic coated separator).

The electrode assembly (ASM) includes cells (CEL) including the cathode (CAT), the anode (ANO), and the separator (SEP). The cells (CEL) may be provided in plurality and disposed within the exterior case (POU). For example, the cells (CEL) may be provided in plurality and may be wound, laminated, folded, or zigzag stacked.

### 2. Inspection method of exterior case for lithium secondary battery

According to an embodiment, sealability of an exterior case (POU) for a lithium secondary battery may be determined without forming a sealing part (SEL) by thermally fusing the exterior case (POU).

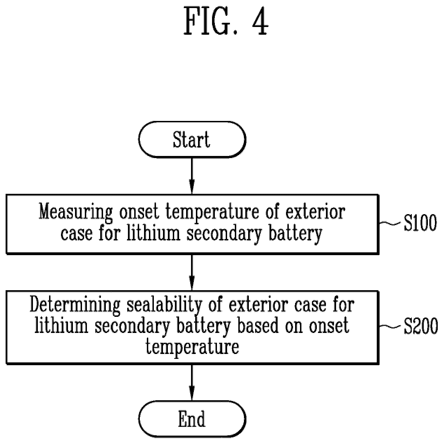

Hereinafter, an inspection method of an exterior case (POU) for a lithium secondary battery according to an embodiment will be described with reference to FIG. 4.

FIG. 4 is a flowchart illustrating an inspection method of an exterior case for a lithium secondary battery according to an embodiment.

Referring to FIG. 4, the inspection method of an exterior case (POU) for a lithium secondary battery may include measuring an onset temperature of the exterior case for a lithium secondary battery (S100) and determining the sealability of the exterior case for a lithium secondary battery based on the onset temperature (S200).

Specifically, the inspection method of an exterior case (POU) for a lithium secondary battery according to an embodiment may include measuring an onset temperature of the exterior case for a lithium secondary battery using an atomic force microscope (AFM) (S100); and determining the sealability of the exterior case for a lithium secondary battery based on the onset temperature (S200).

First, an exterior case (POU) for manufacturing a lithium secondary battery 1 is prepared. The exterior case (POU) may include a plurality of laminated structures including a resin structure for thermal fusion, as described above with reference to FIGS. 1 to 3.

In the step of measuring the onset temperature (S100), the onset temperature of the third inner layer 360 of the exterior case (POU) may be measured using the AFM.

In other words, when referring to FIGS. 1 to 3 together, in the inspection method of an exterior case (POU) for a lithium secondary battery according to an embodiment, the exterior case (POU) for a lithium secondary battery may include an outer layer 100 including one or more of a polyester-based resin and a polyamide-based resin; an inner layer 300 including a polyolefin-based resin, and including a first inner layer 320, a second inner layer 340, and a third inner layer 360, and the step of measuring (S100) may include measuring the onset temperature of the third inner layer 360.

According to an embodiment, the step of measuring (S100) may include contacting a measuring tip of the AFM to a point within 20 µm based on an outer surface of the third inner layer 360.

According to an embodiment, the step of measuring (S100) may include applying heat to the third inner layer 360 by the measuring tip.

For example, the measuring tip of the AFM may contact a point within 20 µm based on the outer surface of the exposed third inner layer 360. A region within 20 µm based on the outer surface of the third inner layer 360 may include at least a region where the exterior cases (POU) are thermally fused to form a sealing part (SEL). In addition, heat may be applied to a region where the measuring tip is provided to increase the ambient temperature, and information representing the bonding structure of the third inner layer 360 according to the change in the ambient temperature (e.g., image data representing the bonding structure) may be obtained. Accordingly, the bonding structure according to the change in temperature may be determined, and when a specific temperature is reached, the structure of the third inner layer 360 may be made flexible as the bonding structure is released. Experimentally, when the bonding structure of the third inner layer 360 is made flexible, the temperature may be specified as the onset temperature of the third inner layer 360.

According to an experimental example, the onset temperature of the target layer may be determined based on the observations of thermal expansion according to the temperature. For example, the tip is brought into contact with the surface of the target layer with a slight pressure, and heat is applied to the target layer at a predetermined rate to cause the temperature to rise. As a result of the heat applied from the tip, thermal expansion occurs in the target layer, causing the tip to be pushed upward, which leads to the observation of positive deflection. Meanwhile, when the temperature reaches the melting point of the target layer due to continuous application of heat, the force that pushes the tip upward due to thermal expansion disappears. Since the tip is installed to lightly press the surface of the target layer as before, a negative deflection may be observed. Through the series of processes described above, a temperature-deflection curve of the target layer can be obtained. The curve may have a peak at the point where the positive deflection transitions to negative deflection. At this time, when referring to the obtained curve, the temperature at a point where the extended lines to the left and right of the peak intersect can be determined as the on-set temperature.

Next, in the step of determining the sealability (S200), the sealability in the lithium secondary battery 1 manufactured using the exterior case (POU) may be determined based on the onset temperature measured in the previous step.

According to an embodiment, the step of determining (S200) may include a step of comparing the onset temperature of the third inner layer 360 with a reference temperature of 100°C.

According to an embodiment, the step of determining (S200) may include, when the onset temperature of the third inner layer 360 is 100°C or higher, determining that the sealability of the lithium secondary battery 1 manufactured using the exterior case (POU) for a lithium secondary battery is suitably achievable; and when the onset temperature of the third inner layer 360 is less than 100°C, determining that it is difficult to suitably achieve the sealability of the lithium secondary battery 1 manufactured using the exterior case (POU) for a lithium secondary battery.

In this step, the measured onset temperature and the reference temperature may be compared. For example, it may be determined whether the measured onset temperature is 100°C or higher. Those skilled in the art have confirmed that when the onset temperature of the melting region in the thermal fusion process in the exterior case (POU) is 100°C or higher, the sealability may be suitably secured, and accordingly, when the measured onset temperature is 100°C or higher, it may be determined that the sealability of the lithium secondary battery 1 manufactured using the corresponding exterior case (POU) may be suitably achieved. Conversely, when the measured onset temperature is less than 100°C, it may be determined that it is difficult to suitably achieve the sealability of the lithium secondary battery 1 manufactured using the corresponding exterior case (POU). In other words, the sealability of the final product may be determined by identifying the thermal characteristics of the exterior case (POU) without performing the thermal fusion process for forming the sealing part (SEL).

Hereinafter, the present disclosure will be described in more detail based on examples and comparative examples. However, the following examples and comparative examples are merely examples for describing the present disclosure in more detail, and the present disclosure is not limited by the following examples and comparative examples.

### 3. Examples and Comparative Examples

### (1) Manufacturing Examples - Examples and Comparative Examples

### [Examples]

### 1) Manufacturing of exterior case

The exterior case used a random polypropylene-based resin including maleic acid as a first inner layer 320, an impact polypropylene-based resin as a second inner layer 340, a random polypropylene-based resin as a third inner layer 360, aluminum as a barrier layer 200, and nylon as an outer layer 100. Then, the first inner layer 320, the second inner layer 340, the third inner layer 360, the barrier layer 200, and the outer layer 100 were laminated in that order to manufacture the exterior case (POU).

### 2) Onset temperature

Lithium secondary batteries 1 according to the Examples were manufactured according to the same manufacturing method, but the content of polypropylene in each of the first inner layer 320, the second inner layer 340, and the third inner layer 360 was adjusted so that the onset temperatures of each of the first inner layer 320, the second inner layer 340, and the third inner layer 360 were different.

For example, the exterior cases (POU) according to Examples 1 to 4 were manufactured so that the onset temperatures of the third inner layer 360 of each of the exterior cases according to Examples had various temperatures of 100°C or higher.

The onset temperatures of each of the first inner layer 320, the second inner layer 340, and the third inner layer 360 in each of the Examples are indicated below.

### 3) Manufacturing of lithium secondary battery

According to the conventional method, a ternary lithium nickel cobalt manganese-based oxide was used as a cathode active material and the active material was applied to an aluminum current collector to manufacture a cathode (CAT), and artificial graphite was used as an anode active material and the active material was applied to a copper current collector to manufacture an anode (ANO). Then, a separator (SEP) including a polyolefin-based material was interposed between the anode (ANO) and the cathode (CAT), and a non-aqueous electrolyte was injected to manufacture the lithium secondary battery 1 according to the Examples.

### [Comparative Examples]

The exterior case according to Comparative Example 1 is manufactured to include a first inner layer 320 and a third inner layer 360 without including a second inner layer 340, and is different from the exterior case (POU) according to the Examples in that it is manufactured so that the onset temperature of the third inner layer 360 is less than 100°C.

The exterior case according to Comparative Example 2 has a structure including a first inner layer 320, a second inner layer 340, and a third inner layer 360, but is different from the exterior case (POU) according to the Examples in that it is manufactured so that the onset temperature of the third inner layer 360 is less than 100°C.

Lithium secondary batteries according to Comparative Examples 1 and 2 were manufactured in the same manner as in the Examples except for the exterior case.

### (2) Experimental Example

The sealability between the Examples and the Comparative Examples were compared. In each of the Examples and the Comparative Examples, the onset temperature at each position of the inner layer 300 within the exterior case (POU) of the lithium secondary battery was measured, and the vent pressure generated in the lithium secondary battery manufactured according to the Examples and the Comparative Examples was measured under a high temperature environment (70°C).

Accordingly, Table 1 may show the relationship between the onset temperature at each position of the inner layer 300 and the vent pressure under a high temperature environment in each of the Examples and the Comparative Examples.

In this Experimental Example, in order to measure the onset temperature of the exterior cases according to the Examples and Comparative Examples, a measuring tip (model name: VIT-DM-NANOTA-200) was installed in the AFM, and the measuring tip was brought into contact with each of the exterior cases according to the Examples and Comparative Examples, and then the temperature was increased at a rate of 5°C/s up to a maximum temperature of 300°C. The deflection of the tip was observed due to heating, and a temperature-deflection curve was obtained through this observation. The onset temperature of each of the exterior cases according to the Examples and Comparative Examples was determined by using the temperature-deflection curves (by referring to the point at the peak where the positive deflection transitions to the negative deflection, and determining the onset temperature as the intersection point of extended lines to the left and right of the peak) obtained from each of the exterior cases according to the Examples and Comparative Examples.

The method for measuring the vent pressure for each of the Examples and Comparative Examples performed in this Experimental Example is as follows. In order to measure the vent pressure, air was injected into the exterior case (POU) of the lithium secondary battery at a rate of 0.001 MPa/2sec in a high temperature environment (70°C), and when the air was discharged to the outside of the exterior case (POU) of the lithium secondary battery, the measured internal pressure was measured as the vent pressure.

**TABLE 1**

| Category | Onset temperature at each position of inner layer 300 (°C) | | | Vent pressure under high temperature environment [MPa] |
|---|---|---|---|---|
| | First inner layer 320 | Second inner layer 340 | Third inner layer 360 | -- |
| Example 1 | 133.7 | 111.9 | 111.89 | 0.60 |
| Example 2 | 90 | 87.25 | 100.2 | 0.40 |
| Example 3 | 90.6 | 94.6 | 103.75 | 0.43 |
| Example 4 | 109.4 | 107.08 | 106.9 | 0.50 |
| Comparative Example 1 | 109 | -- | 95.63 | 0.34 |
| Comparative Example 2 | 77.4 | 77.95 | 83.75 | 0.25 |

Referring to Table 1, it may be confirmed that when the onset temperature of the third inner layer 360 involved in sealing, where the outer exterior cases (POU) are adjacent to each other, is 100°C or higher, the vent pressure in the manufactured lithium secondary battery 1 is measured to be 0.4 MPa or higher under a high temperature environment. In other words, it may be confirmed that the sealability of the lithium secondary battery 1 is suitably achieved when the onset temperature of the third inner layer 360 involved in sealing is 100°C or higher.

It is understood by those skilled in the art that the plurality of exemplary embodiments described above are specific examples of the following aspects.

Aspect 1: An exterior case for a lithium secondary battery, the exterior case comprising: an outer layer comprising one or more of a polyester-based resin and a polyamide-based resin; an inner layer comprising a polyolefin-based resin, and comprising a first inner layer, a second inner layer, and a third inner layer; and a barrier layer disposed between the outer layer and the inner layer, wherein the first inner layer is disposed between the barrier layer and the second inner layer, the second inner layer is disposed between the first inner layer and the third inner layer, and has a different crystal structure from the first inner layer and the third inner layer, and an onset temperature of the third inner layer is 100°C or higher.Aspect 2: The exterior case according to Aspect 1, wherein the polyester-based resin comprises one or more selected from a group consisting of polyethylene terephthalate (PET), polybutylene terephthalate (PBT), polyethylene naphthalate (PEN), polybutylene naphthalate (PBN), copolyester, and polycarbonate (PC), and the polyamide-based resin comprises one or more selected from a group consisting of nylon 6, nylon 6.6, nylon 6.10, and polymethaxylylene amipamide (MXD 6).

Aspect 3: The exterior case according to Aspects 1 or 2, wherein the barrier layer comprises a metal or an inorganic compound, wherein the metal comprises one or more of aluminum and metals, and the inorganic compound comprises silicon oxide or alumina.

Aspect 4: The exterior case according to any one of Aspects 1 to 3, wherein the first inner layer, the second inner layer, and the third inner layer have a thickness ratio of 1:2:1 to 1:3:1.

Aspect 5: The exterior case according to any one of Aspects 1 to 4, wherein the first inner layer comprises random polypropylene and maleic acid, the second inner layer comprises impact polypropylene, and the third inner layer comprises random polypropylene.

Aspect 6: A lithium secondary battery comprising: the exterior case for a lithium secondary battery according to any one of Aspects 1 to 5; and an electrode cell disposed within the exterior case, and comprising a cathode, an anode, and a separator disposed between the cathode and the anode.

Aspect 7: An inspection method of an exterior case for a lithium secondary battery, the method comprising: measuring an onset temperature of an exterior case for a lithium secondary battery using an atomic force microscope (AFM); and determining sealability of the exterior case based on the onset temperature.

Aspect 8: The method according to Aspect 7, wherein the exterior case comprises an outer layer comprising one or more of a polyester-based resin and a polyamide-based resin; an inner layer comprising a polyolefin-based resin, and comprising a first inner layer, a second inner layer, and a third inner layer; and a barrier layer disposed between the outer layer and the inner layer, and the measuring comprises measuring an onset temperature of the third inner layer.

Aspect 9: The method of according to Aspects 7 or 8, wherein the measuring comprises contacting a measuring tip of the AFM to a point within 20 µm based on an outer surface of the third inner layer.

Aspect 10: The method of according to Aspect 9, wherein the measuring comprises applying heat to the third inner layer by the measuring tip.

Aspect 11: The method of according to Aspects 7 or 8, wherein the determining comprises comparing the onset temperature of the third inner layer with a reference temperature of 100°C.

Aspect 12: The method of according to Aspect 11, wherein the determining comprises: when the onset temperature of the third inner layer is 100°C or higher, determining that sealability of a lithium secondary battery manufactured using the exterior case is suitably achievable; and when the onset temperature of the third inner layer is less than 100°C, determining that it is difficult to suitably achieve the sealability of the lithium secondary battery manufactured using the exterior case.

## Claims

1. An exterior case for a lithium secondary battery, the exterior case comprising:
an outer layer comprising one or more of a polyester-based resin and a polyamide-based resin;
an inner layer comprising a polyolefin-based resin, and comprising a first inner layer, a second inner layer, and a third inner layer; and
a barrier layer disposed between the outer layer and the inner layer,
wherein the first inner layer is disposed between the barrier layer and the second inner layer,
the second inner layer is disposed between the first inner layer and the third inner layer, and has a different crystal structure from the first inner layer and the third inner layer, and
an onset temperature of the third inner layer is 100°C or higher.

2. The exterior case according to claim 1, wherein the polyester-based resin comprises one or more selected from a group consisting of polyethylene terephthalate (PET), polybutylene terephthalate (PBT), polyethylene naphthalate (PEN), polybutylene naphthalate (PBN), copolyester, and polycarbonate (PC), and
the polyamide-based resin comprises one or more selected from a group consisting of nylon 6, nylon 6.6, nylon 6.10, and polymethaxylylene amipamide (MXD 6).

3. The exterior case according to claims 1 or 2, wherein the barrier layer comprises a metal or an inorganic compound,
wherein the metal comprises one or more of aluminum and metals, and
the inorganic compound comprises silicon oxide or alumina.

4. The exterior case according to any one of claims 1 to 3, wherein the first inner layer, the second inner layer, and the third inner layer have a thickness ratio of 1:2:1 to 1:3:1.

5. The exterior case according to any one of claims 1 to 4, wherein the first inner layer comprises random polypropylene and maleic acid,
the second inner layer comprises impact polypropylene, and
the third inner layer comprises random polypropylene.

6. A lithium secondary battery comprising:
the exterior case for a lithium secondary battery according to any one of claims 1 to 5; and
an electrode cell disposed within the exterior case, and comprising a cathode, an anode, and a separator disposed between the cathode and the anode.

7. An inspection method of an exterior case for a lithium secondary battery, the method comprising:
measuring an onset temperature of an exterior case for a lithium secondary battery using an atomic force microscope (AFM); and
determining sealability of the exterior case based on the onset temperature.

8. The method according to claim 7, wherein the exterior case comprises an outer layer comprising one or more of a polyester-based resin and a polyamide-based resin; an inner layer comprising a polyolefin-based resin, and comprising a first inner layer, a second inner layer, and a third inner layer; and a barrier layer disposed between the outer layer and the inner layer, and
the measuring comprises measuring an onset temperature of the third inner layer.

9. The method according to claims 7 or 8, wherein the measuring comprises contacting a measuring tip of the AFM to a point within 20 µm based on an outer surface of the third inner layer.

10. The method according to claim 9, wherein the measuring comprises applying heat to the third inner layer by the measuring tip.

11. The method according to claims 7 or 8, wherein the determining comprises comparing the onset temperature of the third inner layer with a reference temperature of 100°C.

12. The method according to claim 11, wherein the determining comprises:
when the onset temperature of the third inner layer is 100°C or higher, determining that sealability of a lithium secondary battery manufactured using the exterior case is suitably achievable; and
when the onset temperature of the third inner layer is less than 100°C, determining that it is difficult to suitably achieve the sealability of the lithium secondary battery manufactured using the exterior case.
